(19) Europäisches Patentamt
European Patent Office
Office européen des brevets

(11) Publication number: **0 254 501 B1**

# EUROPEAN PATENT SPECIFICATION

(45) Date of publication of patent specification: **23.10.91**

(51) Int. Cl.5: **C04B 28/00**, C04B 28/14, C04B 38/02, C04B 40/06, //(C04B28/00,18:08,20:10,22:10, 22:14),(C04B28/14,18:08,20:10, 22:10,22:14)

(21) Application number: **87306349.9**

(22) Date of filing: **17.07.87**

The file contains technical information submitted after the application was filed and not included in this specification

(54) **Foamable composition.**

(30) Priority: **24.07.86 GB 8618063**
**22.01.87 GB 8701349**

(43) Date of publication of application:
**27.01.88 Bulletin 88/04**

(45) Publication of the grant of the patent:
**23.10.91 Bulletin 91/43**

(84) Designated Contracting States:
**AT BE CH DE ES FR GB GR IT LI LU NL SE**

(56) References cited:
**DE-B- 1 020 267**
**GB-A- 402 101**
**US-A- 465 385**
**US-A- 1 906 138**
**US-A- 2 037 995**

(73) Proprietor: **FOSROC INTERNATIONAL LIMITED**
**285 Long Acre**
**Nechells Birmingham B7 5JR(GB)**

(72) Inventor: **Smart, Roderick Macdonald**
**33 Trinity Road**
**Great Barr Birmingham(GB)**

(74) Representative: **Shaw, Laurence**
**George House George Road**
**Edgbaston Birmingham B15 1PG(GB)**

Rank Xerox (UK) Business Services

## Description

The invention relates to the placing of a foamable composition, and in particular a rapid setting foamable grout, by spraying on to a substrate.

It is known from GB-A-402101 to form a porous plaster from water and a composition comprising particulate anhydrite, an accelerator such as a sulphate, a gas producing ingredient, e.g. a carbonate to produce carbon dioxide gas, and a small amount of Portland cement. The composition is allowed to set at a slow rate. The cement is present to reinforce the cellular structure, i.e. to prevent premature collapse. Clinker may also be present. The porosity may be varied by variation in the gas producing system.

It is known from US-A-2606127 to form a composition for making lightweight building insulating articles, the composition comprising acidulous anhydrous calcium sulphate residue and a siliceous material, e.g. fly ash, smelter slags, cinders, hydrated combustion residues. The composition expands by about 25 to 30% and the density is about 0.9 to 1.2.

It is known from US-A-1906138 to combine a binder,'e.g. Plaster of Paris, an aggregate and a gas evolving mixture (e.g. calcium carbonate and aluminium sulphate) to form a sound absorbing wall surface.

This invention is based on the realisation that if a slurry is made of a defined particulate material, a gas producing ingredient and water, and this is combined with a solution of a rapid setting agent and the combined slurry and the solution are applied as a spray to a surface, the formed low density foam composition and can be applied to vertical surfaces quickly.

Accordingly in one aspect the invention provides a method of placing a rapidly-setting foamable composition on a substrate, the method comprising mixing together a filler, a gas producing ingredient, a rapid setting agent which when dissolved in water will form an acidic solution, and water characterised in that the filler is a pozzolan which is formed into a slurry with the gas producing ingredient and water, the rapid setting agent is dissolved in water to form an acidic solution, and in that the slurry and the solution are separately pumped through a mixing device and in that the formed mixture is sprayed on to the substrate.

The pozzolan is preferably a fly ash, preferably pulverised fly ash having a particulate size less than about 40 micron. Slags such as blast furnace slag may be used, especially if measures are taken to reduce the evolution of hydrogen sulphide therefrom. Cements are not suitable as the only filler because of their alkalinity but a proportion of a cement can be tolerated so long as the combined composition are sufficiently acidic for sufficient time to cause or allow the evolution of the expansion gas.

Before the composition is allowed to set, the gas evolved causes a foaming, which increases the total volume significantly. Before the foam can collapse, the rapid setting agent causes the composition to set, as a result of which the foam is quickly stabilised. The use of additives such as foam stabilisers can accordingly be reduced or avoided.

The rapid setting agent is most preferably aluminium sulphate. Preferably this agent makes up from about 1 to about 15% by weight of the composition.

The expansion gas is preferably carbon dioxide and the source thereof may be calcium carbonate, sodium carbonate, magnesium carbonate or the like. Bicarbonates may also be used. The source may make up from about 1% to about 10% by weight of the composition, (i.e. the dry powder before water is added).

It is an advantageous feature of the invention that the source of the expansion gas is selected so that the gas expansion does not take place until required, for example, until a combined composition is placed. This degree of control can be achieved by providing the source of expansion gas with a protective coating which is released or removed when the gas is required. As preferred examples the coating may be a starch or stearate coating applied to the source of expansion gas, which coating is dissolved off under slightly acidic conditions, e.g. a pH of about 4 to about 6.

A strengthening agent may be present to strengthen the foamed composition. The strengthening agent is one which reacts at high speed to help stabilise the foam and for this purpose most preferably is calcium sulphate hemi hydrate.

The composition may include a low density particulate filler which has a density not exceeding $0.5 \text{gm/cm}^3$. In addition the filler must be one which will not detract from the high strength. This can be achieved either by selecting filler which also has a relatively high strength or which will be reactive in this context and thus contribute to the high strength. Fillers which are of low density and non-reactive include perlite, vermiculites and foamed polystyrene; fillers which are of low density and reactive include hollow pulverised fly ash spheres; expanded blast furnace slags; hollow glass spheres; foamed glass beads. The content of this filler may make up from about 5 to about 50% by weight of the dry composition.

The particle size of the particulate filler component will be selected to be compatible with the other ingredients. Typically, the particles will have a mean particle diameter of below 5 mm, and above 0.1 mm.

The amount of filler will usually be less than proportion of the pozzolan.

The slurry is pumped from one source to the desired location. A solution of the fast setting agent is pumped from a second source to the desired location. Before placement the two liquids are mixed, e.g. by use of a mixing nozzle of the type used in spray concrete, and the combined liquids are placed as required. As a result, a foam is quickly formed on the sprayed substrate, and the foam is set before it can collapse. This is especially advantageous when spraying vertical walls and permits the speedy removal of shuttering.

A composition of the invention may be used for a variety of industrial purposes. For example, in mining, the composition may be used to form a set body in void filling, archway filling, roof support and mine wall insulation. In construction the composition may be used as a set body in cavity insulation, thermal insulation, cavity filling, fire control or protection and lightweight panels. The body may be shaped as boards, blocks, etc.

The invention is illustrated by the following examples, in which unless otherwise stated parts are by weight.

Example I

100 gms of powder comprising:

| | |
|---|---|
| pulverised fly ash | 80 |
| $CaSO_4 . 1/2 H_2O$ | 17 |
| $CaCO_3$ | 3 |

was added to 20 ml of a solution of 500 gms $Al_2 (SO_4)_3 . 14 H_2O$ dissolved in 1000 gm water. Foaming occurred after a few seconds and the foamed mass became rigid after about 70 seconds. The grout had the following properties:

Time to maximum volume       :       about 12 seconds

Density       1 hour       :       0.49 $gm/cm^3$

24 hours       :       0.45 $gm/cm^3$

Compressive strength  (28 days)  :  9.1 $N/mm^2$

Example II

Different proportions of aluminium sulphate were added to compositions comprising pulverised fly ash and water, and the rate of setting was noted. The following results were obtained:

| % aluminium sulphate | initial set (min) | final set (min) |
|---|---|---|
| 0.0 | 24 hours + | - |
| 0.5 | 220 | 300 |
| 1.0 | 190 | 240 |
| 1.5 | 140 | 200 |
| 2.0 | 18 | 55 |
| 2.5 | 6 | 35 |
| 5.0 | 4 | 9 |

Example III

100 gms of powder comprising:

3

| pulverised fuel ash | 60 |
| ordinary Portland Cement | 30 |
| $CaCO_3$ | 10 |

was mixed with 30 ml of a solution of 500 gms $Al_2(SO_4)_3$. 14 $H_2O$ dissolved in 1000 gm water. Foaming occurred almost immediately and the foamed mass set rapidly to give a foamed grout having the following properties:

```
Density                          1 hour    :        0.51 gm/cm3

                                 24 hours  :        0.48 gm/cm3

Compressive strength  (28 days)  :        6.4  N/mm2
```

This example shows that even when a proportion of cement is present, there is sufficient acidity for the $CO_2$ to be released to foam the fuel ash.

Example IV

100 gms of powder comprising:

| anhydrite or Plaster of Paris | 90 |
| $CaCO_3$ | 10 |

was mixed with 40 ml of a solution of 500 gms $Al_2(SO_4)_3$ 14 $H_2O$ dissolved in 1000 ml of water. Foaming occurred immediately followed by very rapid setting of the foamed mass which had the following properties:

```
Time to self supporting strength      :   approx. 30 seconds


Density                          1 hour    :   0.38 gm/cm3

                                 24 hours  :.  0.34 gm/cm3

Compressive strength  (28 days)  :   3.4 N/mm2
```

Claims

1. A method of placing a rapidly-setting foamable composition on a substrate, the method comprising mixing together a filler, a gas producing ingredient, a rapid setting agent which when dissolved in water will form an acidic solution, and water characterised in that the filler is a pozzolan which is formed into a slurry with the gas producing ingredient and water, the rapid setting agent is dissolved in water to form an acidic solution, and in that the slurry and the solution are separately pumped through a mixing device and in that the formed mixture is sprayed on to the substrate.

2. A method according to Claim 1 characterised in that calcium sulphate hemi hydrate is included in the slurry to stabilise the foam sprayed on to the substrate.

3. A method according to Claim 1 and 2 characterised in that a low-density particulate filler which will contribute to the strength of the set composition is present in a concentration of from 5% to 50% by weight of the composition.

4. A method according to any preceding Claim characterised in that the gas producing ingredient is covered by a protective coating e.g. a starch or stearate coating, which is dissolved off when the slurry is mixed with the solution.

5. A method according to any preceding Claim characterised in that the pozzolan is pulverised fly ash or blast furnace slag.

**Revendications**

1. Méthode de déposition sur un substrat d'une composition à solidification rapide susceptible de mousser, la méthode consistant à mélanger ensemble une charge, un ingrédient producteur de gaz, un agent à solidification rapide qui en se dissolvant dans l'eau formera une solution acide, et l'eau, caractérisée en ce que la charge est une pouzzolane qui est formée en bouillie avec l'ingrédient producteur de gaz et l'eau, l'agent de solidification rapide est dissous dans l'eau pour former une solution acide, en ce que la bouillie et la solution sont pompées séparément au travers d'un dispositif mélangeur et en ce que le mélange formé est pulvérisé sur le substrat.

2. Méthode selon la revendication 1, caractérisée en ce que le sulfate de calcium semi-hydrate est incorporé dans la bouillie afin de stabiliser la mousse pulvérisée sur le substrat.

3. Méthode selon les revendications 1 et 2, caractérisée en ce qu'une charge particulaire de faible densité qui contribuera à la résistance de la composition solidifiée est présente en une concentration allant de 5% à 50% en poids de la composition.

4. Méthode selon l'une quelconque des revendications précédentes, caractérisée en ce que l'ingrédient producteur de gaz est recouvert d'un enrobage protecteur par exemple un enrobage d'amidon ou de stéarate, qui se dissout lorsque la bouillie est mélangée à la solution.

5. Méthode selon l'une quelconque des revendications précédentes, caractérisée en ce que la pouzzolane est de la suie pulvérisée ou du laitier de haut fourneau.

**Patentansprüche**

1. Verfahren zum Aufbringen einer schnell abbindenden schäumbaren Zusammensetzung auf eine Unterlage, das darin besteht, daß man ein Füllmittel, einen gaserzeugenden Bestandteil, ein Schnellabbindemittel, das beim Lösen in Wasser eine saure Lösung bildet, und Wasser vermischt, dadurch gekennzeichnet, daß es sich bei dem Füllmittel um Pozzolanerde handelt, das mit dem gaserzeugenden Bestandteil und Wasser eine Aufschlämmung bildet, das Schnellabbindemittel in Wasser unter Bildung einer sauren Lösung gelöst wird, und dadurch, daß die Aufschlämmung sowie die Lösung getrennt durch eine Mischvorrichtung gepumpt werden und dadurch, daß die entstandene Mischung auf die Unterlage aufgesprüht wird.

2. Verfahren nach Anspruch 1, dadurch gekennzeichnet, daß die Aufschlämmung zur Stabilisierung des auf die Unterlage gesprühten Schaums Calciumsulfat-Hemihydrat enthält.

3. Verfahren nach Anspruch 1 und 2, dadurch gekennzeichnet, daß das zur Stärke der abgebundenen Zusammensetzung beitragende teilchenförmige Füllmittel geringer Dichte in einer Konzentration von 5 bis 50 Gewichtsprozent der Zusammensetzung vorliegt.

4. Verfahren nach einem der vorhergehenden Ansprüche, dadurch gekennzeichnet, daß der gaserzeugende Bestandteil mit einem Schutzüberzug beschichtet wird, z.B. einem Überzug aus Stärke oder Stearat, der beim Mischen der Aufschlämmung mit der Lösung weggelöst wird.

5. Verfahren nach einem der vorhergehenden Ansprüche, dadurch gekennzeichnet, daß es sich bei der Pozzolanerde um pulverisierte Flugasche oder Hochofenschlacke handelt.